# FASCICULE DE BREVET EUROPEEN

(11) **EP 3 496 552 B1**
(45) Date de publication et mention de la délivrance du brevet: **09.04.2025**
(21) Numéro de dépôt: 17748749.3
(22) Date de dépôt: 03.08.2017
(51) Int. Cl.: A23K 40/35

(54) **PRODUIT MULTICOUCHES DESTINE A L'ADMINISTRATION ORALE ET A LA LIBERATION CONTROLEE DE PLUSIEURS SUBSTANCES ACTIVES DIFFERENTES DANS LE SYSTEME DIGESTIF D'UN ANIMAL DE RENTE**
MEHRSCHICHTIGES PRODUKT ZUR ORALEN VERABREICHUNG UND KONTROLLIERTEN FREISETZUNG VON MEHREREN VERSCHIEDENEN WIRKSTOFFEN IM VERDAUUNGSSYSTEM EINES NUTZTIERS
MULTILAYER PRODUCT INTENDED FOR THE ORAL ADMINISTRATION AND CONTROLLED RELEASE OF SEVERAL DIFFERENT ACTIVE SUBSTANCES IN THE DIGESTIVE SYSTEM OF A LIVESTOCK ANIMAL

(30) Priorité: 08.08.2016 FR 1657631
(43) Date de publication de la demande: 19.06.2019
(73) Titulaire: Descrot, David, 35800 Dinard (FR)
(72) Inventeur: Descrot, David, 35800 Dinard (FR)
(74) Mandataire: Cabinet Le Guen Maillet
(86) Numéro de dépôt international: PCT/EP2017/069702
(87) Numéro de publication internationale: WO 2018/029089

(56) Documents cités:
- EP-A2- 0 588 346
- EP-A2- 0 619 079
- US-A- 5 633 004
- US-A1- 2010 272 852

## Description

La présente invention concerne le domaine technique de la nutrition animale et, plus particulièrement, celui de la complémentation en substances actives nécessaires à l'animal, en particulier aux animaux de rente, tels que les ruminants, notamment dans le cadre de l'alimentation de précision.

Les animaux de rente sont les animaux élevés pour une activité économique telle que la production de viande, d'œufs ou de lait, ou encore de laine ou de fourrure. Il s'agit par exemple des bovins, des ovins, de l'espèce avicole, des porcs et des lapins.

L'alimentation de précision et la complémentation de l'alimentation de ces animaux par des substances actives déterminées permettent à ces animaux de recevoir une alimentation qui est équilibrée, adaptée à leurs besoins, à leurs conditions, à leur race et à leur âge, qui est favorable à leur croissance et à leur bien-être et qui maintient leur bon état sanitaire.

Cependant, lors de cette complémentation, il convient de tenir compte de la particularité du système digestif des animaux afin de cibler au mieux le ou les organes dans lesquelles une substance active donnée doit être absorbée ou utilisée. Par exemple, concernant le ruminant, le système digestif de celui-ci est composé de trois pré-estomacs, dont le rumen, le réticulum et l'omasum ainsi que d'un estomac, l'abomasum ou caillette, et des intestins. Le rumen est le premier des trois pré-estomacs et le plus volumineux d'entre eux. Cet organe est riche en microorganismes tels que des bactéries, des protozoaires, des champignons et des archaea. Les microorganismes vont réaliser la dégradation des nutriments qui pénètrent dans le rumen, par fermentation anaérobique. Le rumen permet notamment la dégradation de nutriments dits indigestes tels que la cellulose, qui ne seraient pas digérés par ailleurs. S'il peut être bénéfique de fournir au rumen certaines substances actives afin qu'elles y soient utilisées, d'autres substances actives y seraient inutilement dégradées et perdraient leur fonctionnalité physiologique.

A titre d'exemple de substances actives destinées à être délivrées et utilisées dans le rumen, on citera les sources d'azote non protéiques. Une des particularités des ruminants est qu'ils sont capables de synthétiser à partir d'une telle source les protéines dont ils ont besoin, notamment pour leur croissance, le fonctionnement de leurs tissus, ou la production de leur lait. En effet, les microorganismes présents dans le rumen sont capables de convertir l'azote issu de ces sources concentrées en ammoniaque et d'utiliser cette ammoniaque pour synthétiser des acides aminés puis des protéines indispensables aux ruminants. Cette synthèse protéique par les microorganismes est étroitement liée à la quantité d'énergie, sous forme d'ATP, produite par la fermentation des glucides provenant de la ration alimentaire. Un apport en grande quantité de source d'azote non protéique n'est cependant pas souhaitable car la transformation de l'azote en ammoniaque est très rapide et cet ammoniaque, s'il n'est pas métabolisé par les microorganismes, passe ensuite dans la circulation sanguine et devient toxique pour l'animal. Afin de remédier au problème de l'utilisation trop rapide de l'azote dans le rumen, il a été proposé des complémentations en sources d'azote non protéiques, dites à libération prolongée et qui permettent de libérer l'azote par exemple à un taux identique au taux auquel il est métabolisé notamment par la flore microbienne. A ce titre, on citera le brevet US 6,620,453 qui décrit des composés contenant une telle source d'azote protégée par une membrane semi perméable en résine de polyuréthane, de polyoléfine ou encore de polyester, des polymères non dégradables dans le rumen. Le caractère semi perméable de la membrane assure alors la libération progressive de l'azote. Bien qu'efficace, l'utilisation de tels composés issus du pétrole n'est pas très avantageuse. En outre, la formation de la membrane peut s'avérer techniquement complexe. Concernant encore la libération prolongée de source d'azote, on citera également le brevet EP 1 043 295 lequel décrit des particules d'urée protégées par des revêtements formés par des réseaux relativement complexes de polymères assurant la libération prolongée d'azote.

Il convient de noter que la quantité d'azote à apporter et sa vitesse de libération ne sont pas les seules composantes à prendre en compte dans le bon fonctionnement des réactions se déroulant dans le rumen. En effet, la qualité, la quantité et l'équilibre des populations de microorganismes du rumen sont également à prendre en compte car ces populations sont susceptibles d'être affaiblies en fonctions de nombreux facteurs. Par exemple, une baisse de la valeur du pH du rumen, lors d'un état d'acidose, peut modifier cet équilibre et altérer la flore. Or, si ces populations ne sont pas maintenues à un niveau optimum, des réactions telles que la synthèse protéique citée précédemment, même en présence d'apports de sources d'azote, ne peuvent être maintenues. Cependant, l'état de la technique tel que celui cité précédemment, ne s'intéresse pas au maintien qualitatif et quantitatif des microorganismes, en particulier à l'équilibre des populations de microorganismes telles que les populations bactériennes du rumen. Il serait ainsi clairement avantageux de disposer de moyens pour délivrer dans le rumen, outre des sources d'azote non protéiques, des substances actives bénéfiques qui permettent de maintenir un équilibre entre populations de microorganismes ou d'orienter la flore du rumen vers une population spécifique devant être privilégiée en fonction des conditions environnementales, par exemple par l'apport d'agents permettant une régulation permanente du pH du rumen.

A titre d'exemple de substances actives qu'il est utile de fournir aux ruminants et qui doivent, quant à elles, parvenir intactes aux organes post rumen, c'est-à-dire aux organes en aval du rumen dans le système digestif, tels que l'abomasum ou encore l'intestin, on peut citer les protéines, les peptides, les acides aminés, vitamines, enzymes, médicament, minéraux, etc... Ces substances actives étant ingérées par voie orale, elles circulent dans le système digestif du ruminant et, de ce fait transitent dans le rumen. De manière à éviter la digestion de ces substances dans le rumen, une enveloppe de protection est généralement prévue, par exemple à base de matériaux tels que des matériaux hydrophobes ou des matériaux non solubles à un pH proche de celui du rumen, c'est-à-dire à un pH autour de 6. Le brevet européen EP 2 197 293 décrit par exemple une composition dite de « by pass » du rumen, laquelle permet de délivrer une substance active dans un organe post rumen, en évitant sa dégradation dans le rumen. La composition se présente sous la forme d'un granule dont le noyau comprend un sel d'acide aminé qui est protégé de la dégradation dans le rumen par plusieurs couches d'enrobage. Les demandes de brevet EP 06 19 079, US 2010/272852, EP0588 346 et US 5 633 004 décrivent également de tels produits de by pass du rumen sous forme de granulés. De même, le brevet EP 0 336 713 décrit également une composition destinée à « by passer » le rumen, en particulier une composition destinée à l'enrobage d'un noyau de substance active devant être libérée post rumen. Ces états de la technique évoquent, en outre, la possibilité de délivrer plusieurs substances actives par le biais d'un unique produit. Ces substances actives se présentent alors sous la forme de mélanges constituant les noyaux des granules, les noyaux étant protégés de la dégradation dans le rumen par des enrobages adaptés. Toutefois, on note que la libération des substances actives est opérée de manière simultanée et dans le même organe.

Il ressort ainsi de l'état de la technique qu'il n'existe pas de solutions permettant de supplémenter un animal de rente par le biais d'un seul produit et d'une seule prise, en plusieurs substances actives de nature différente, chacune étant destinée à être libérée dans un même organe du système digestif, par exemple dans l'estomac ou dans l'un des pré-estomacs chez le ruminant, mais selon des cinétiques différentes ou à des moments différents dans le cycle de digestion, ou encore certaines étant destinées à être libérées dans un premier organe du système digestif, tel que l'estomac ou dans l'un des pré-estomacs chez le ruminant, et d'autres étant destinées à être libérées dans un autre organe du système digestif, tel que l'intestin.

C'est dans ce contexte que la société déposante a mené ses recherches et développé des nouveaux produits qui présentent tous les avantages précités, tout en étant simples de réalisation et d'utilisation.

A cet effet, l'invention concerne un produit multicouches destiné à l'administration orale et à la libération contrôlée de plusieurs substances actives différentes dans le rumen d'un animal de rente, le produit comprenant un noyau d'urée et progressant depuis le noyau, de manière concentrique :
- une matrice d'enrobage formée de matières grasses hydrogénées à base d'huile de colza, de tournesol ou d'huile de palme, présentant une cinétique de dégradation dans le rumen comprise entre 1 et 24h,
- une couche de seconde substance active choisie parmi le carbonate de calcium micronisé, le sulfate de sodium micronisé, une poudre de quilaia micronisée, une poudre d'Ascophyllum Nodosum micronisée,
- une matrice d'enrobage formée de matières grasses hydrogénées à base d'huile de colza, de tournesol ou d'huile de palme, présentant une cinétique de dégradation dans le rumen comprise entre 1 et 24h,
   la quantité de matrice d'enrobage étant comprise entre 2 et 13%, en poids du produit
   le produit se présentant sous la forme d'une bille sphérique présentant un diamètre compris entre 0,01 et 5 mm.Sont inclus, dans les animaux de rente, au sens de l'invention, ceux dont le système digestif comprend un estomac et, plus en aval dans le système digestif, des intestins, c'est-à-dire des animaux monogastriques, et ceux dont le système digestif comprend des pré-estomacs, un estomac et, plus en aval dans le système digestif, des intestins, c'est à dire des animaux polygastriques. A titre d'exemple d'animaux polygastriques envisagés dans le cadre de l'invention, on citera les ruminants, dont le système digestif comprend, en suivant l'ordre du système digestif, trois pré-estomacs dont le rumen, le réticulum et l'omasum, un estomac, et des intestins.

Ainsi, le produit selon l'invention présente l'avantage de pouvoir délivrer à la fois plus d'une substance active, à des moments différents ou selon une vitesse de libération différente. Ceci est rendu possible par l'inclusion des substances actives dans différentes couches qui sont superposées l'une au-dessus de l'autre autour du noyau et par l'utilisation de matrices d'enrobage qui vont protéger la substance active et rendre la dégradation progressive dans le milieu stomacal lorsque cette substance doit être délivrée dans l'estomac d'un animal monogastrique ou dans l'un des pré-estomacs ou l'estomac d'un animal polygastrique.

Avantageusement, les matrices d'enrobage comprennent des composés hydrophobes et/ou stables à un pH compris entre 3 et 7, c'est-à-dire au pH de l'estomac ou des pré-estomacs. Les matrices d'enrobages peuvent être réalisées en tout matériaux ou composés qui ne sont pas dégradables dans le suc gastrique ou qui y sont dégradés progressivement, par exemple par réaction chimique ou par réaction enzymatique, de manière à permettre une libération prolongée, mais qui sont par contre dégradés dans les organes post estomac. L'homme du métier trouvera dans l'état de la technique de tels matériaux ou composés. En effet, de telles matrices d'enrobage sont aujourd'hui connues et ne font pas l'objet en tant que telles de la présente invention. Parmi les matrices d'enrobage les plus utilisées se trouvent celles qui sont sensibles au pH ou celles qui sont hydrophobes. En fonction des pH, connus en soi, des organes du système digestif de l'animal visé, l'homme du métier saura sélectionner les matériaux ou composés adéquats pour former la matrice d'enrobage recherchée. Par exemple, concernant les ruminants, le pH du rumen est autour de 6 et celui des intestins autour de 2. Ainsi, la matrice enrobant une substance active devant être libérée dans les intestins pourra être composée de polymères stables à ph 6 mais instables à pH 2. De manière alternative, la matrice d'enrobage pourra être composée d'acides gras qui ne sont pas réduits dans le rumen mais qui le sont dans les intestins. En outre, la cinétique de libération souhaitée, de manière à obtenir une libération prolongée ou non dans le temps, dépendra de la quantité de composés hydrophobes et/ou sensible au pH, ainsi que de l'épaisseur de la matrice d'enrobage.

Avantageusement, la matrice d'enrobage est composée d'une matière grasse animale ou végétale hydrogénée ou partiellement hydrogénée, telle que l'huile de palme, de ricin, de coton, de colza, de soja, de maïs, de tournesol, d'acides gras, préférentiellement présentant un nombre d'atomes de carbones supérieur à 14, d'alcools gras, d'esters d'acides gras, tels que du glycérol, d'une cire, par exemple d'abeille ou de ricin, une cire microcristalline, d'un composé cellulosique, d'un ou plusieurs polymères hydrophobes et/ou stables à un pH compris entre 3 et 7, ou leurs mélanges.

Avantageusement encore, l'épaisseur des matrices d'enrobage diminue graduellement depuis la couche d'enrobage la plus proche du noyau jusqu'à la couche d'enrobage la plus distante du noyau, ou inversement.

Les épaisseurs des différentes matrices seront choisies en fonction notamment de la cinétique de libération des substances actives souhaitées.

Avantageusement encore, les matrices d'enrobage représentent entre 2 et 13% en poids du produit lorsque l'enrobage présente une cinétique de dégradation dans l'estomac ou l'un des pré-estomacs comprise entre 1 et 24 h, et plus de 13% en poids du produit lorsque l'enrobage est non dégradable dans l'estomac ou l'un des pré-estomacs, mais dégradable dans l'un des organes qui le suit.

Avantageusement encore, les couches de substances actives se présentent sous forme d'une poudre ou d'un liquide, ou de la substance active fixée sur un support, par exemple organique ou minéral, ou en mélange avec un adjuvent tel qu'un liant.

Un produit tel que décrit précédemment est obtenu par un procédé comportant les étapes suivantes : obtention d'un noyau d'une substance active puis superposition autour de ce noyau d'un ou plusieurs des motifs décrits précédemment et contenant une autre substance active, avantageusement par méthode de sprayage, d'atomisation, nébulisation, ou de pulvérisation.

L'invention concerne encore un ensemble de produits tels que définis précédemment, dans lequel les produits sont sous la forme de billes sphériques homogènes en taille.

Les caractéristiques de l'invention mentionnées ci-dessus, ainsi que d'autres, apparaîtront plus clairement à la lecture de la description suivante d'un exemple de réalisation.

### Exemple 1 - Billes pour administration par voie orale de substances actives pour ruminants :

Des billes sphériques, de diamètre compris entre 0,1 et 0,5 mm, ont été formulées de manière à libérer dans le rumen à la fois de l'urée (substance active 1) et une substance active 2 choisie parmi : le carbonate de calcium micronisé, le sulfate de sodium micronisé, la poudre de quilaia micronisée, le bicarbonate de sodium micronisé, le lithothamne micronisé, une huile essentielle, la poudre d'Ascophyllum Nodosum micronisée . Chaque bille comprend :
- un noyau d'urée et s'étendant depuis ce noyau de manière concentrique :
- une matrice d'enrobage enrobant le noyau et formée de matières grasses hydrogénées à base d'huile de colza, de tournesol ou d'huile de palme, présentant une cinétique de dégradation dans le rumen comprise entre 1 et 24h
- un motif, autour de l'enrobage, comprenant, dans l'ordre :
   - une couche de substance active 2,
   - une matrice d'enrobage, enrobant la couche de substance active 2, et formée de matières grasses hydrogénées à base d'huile de colza (point de fusion entre 65 et 70°C), de tournesol (point de fusion entre 63 et 70°C) ou d'huile de palme (point de fusion entre 56 et 60°C), présentant une cinétique de dégradation dans le rumen comprise entre 1 et 24 h .

Une telle bille est fabriquée selon le procédé de préparation suivant :
- (a1) obtention de billes, ou granules, d'urée de diamètre moyen compris entre 1,5 et 2 mm, adaptées à l'alimentation animale,
- (a2) préchauffage des billes, ou granules, d'urée à une température de 35-60°C,
- (a3) introduction des billes, ou granules, d'urée dans une turbine équipée de buses de spray, et rotation du cylindre,
- (b1) sprayage de la matrice d'enrobage du noyau d'urée (matrice préchauffée à une température supérieure à sa température de fusion) et malaxage concomitant du mélange à une température dans l'enceinte de la turbine inférieure à 65°C, durant 4 à 6 min,
- (b2) arrêt du sprayage mais maintien du malaxage durant 30 secondes à 1 minute,
- (b3) refroidissement de la température dans l'enceinte par ajout d'air à 20°C, durant 2 à 3 minutes,
- (b4) sprayage de la matrice d'enrobage et malaxage concomitant du mélange, durant 2 à 4 minutes,
- (b5) arrêt du sprayage mais maintien du malaxage durant 30 secondes à 1 minute,
- (b6) refroidissement de la température dans l'enceinte par ajout d'air à 20°C, durant 2 à 3 minutes,
- (c1) sprayage de la substance active (dans l'exemple 1 : saponine sous forme de poudre) et malaxage concomitant du mélange, durant 2 à 4 minutes,
- (c2) sprayage de la matrice d'enrobage destinée à enrober la couche de substance active (préchauffée à une température supérieure à la température de fusion de la matrice), et malaxage concomitant du mélange, durant 4 à 6 minutes,
- (c3) arrêt du sprayage mais maintien du malaxage durant 30 secondes à 1 minute,
- (c4) refroidissement de la température dans l'enceinte par ajout d'air à 20°C, durant 2 à 3 minutes,
- si ajout d'autres motifs contenant d'autres substances actives, par superposition concentrique, les étapes (c1) à (c4) sont répétées autant de fois qu'il y a de motifs.

Dans un produit dans lequel la libération des substances actives est attendue dans le rumen, la quantité de matrice d'enrobage est de 2 à 13 %, en masse, de la masse du noyau

### Exemple 2 - Mesure du temps de libération de substances actives dans un milieu représentatif du rumen d'un ruminant (Tableau 1):

**Tableau 1**

| temps | Témoin 1 | Témoin 2 | Urée enrobée+ quilaia | Urée enrobée+ carbonate de calcium |
|---|---|---|---|---|
| 30 min. | 104 | 9 | 24 | 35 |
| 1h | 104 | 21 | 47 | 59 |
| 2h | 104 | 39 | 60 | |
| 3h | 103 | 57 | 79 | 82 |
| 4h | 104 | 58 | 87 | |
| 5h | 103 | 73 | 89 | |
| 6h | 106 | 86 | 93 | 94 |

### Granules testés :

Témoin 1 : granules d'urée sans enrobage
Témoin 2 : granules d'urée enrobée par un enrobage composé d'huile de palme hydrogénée, l'enrobage représentant 10 % en poids du granule.

Urée enrobée + quilaia : granules selon l'exemple 3 comportant en tant que substance active autre que l'urée, du quilaia (2% en poids). L'enrobage est composé d'huile de colza hydrogénée et représente 11 % en poids du granule.

Urée enrobée + carbonate de calcium : granules selon l'exemple 3 comportant en tant que substance active autre que l'urée, du carbonate de calcium (3% en poids). L'enrobage est composé d'huile de colza hydrogénée et représente 10 % en poids du granule.

Reproduction du milieu du rumen : est utilisée une solution d'eau déminéralisée tamponnée à pH 6-6,5 à l'aide d'acide acétique et soumise à un bain-marie afin de maintenir la température à 39°C. Les granules sont placés dans cette solution, sous agitation.

Résultats : on mesure le pourcentage de libération de l'urée pour chaque type de granules, en fonction du temps. Sans enrobage, le témoin 1 indique une libération de l'urée dans le milieu du rumen presque immédiate puisque la totalité de l'urée est libérée au bout de 30 minutes (104% +/- 5% d'urée libéré). Le témoin 2 servant de témoin positif démontre que l'enrobage de l'urée permet de retarder sa libération et de la rendre progressive sur une période de 6 heures. Les granules selon l'invention se montrent très efficaces pour libérer l'urée dans le rumen de manière progressive sur une période de 6 heures. On note même que l'ajout d'une couche de seconde substance active enrobée par rapport au témoin 2 tend à accélérer légèrement la libération d'urée tout en maintenant la quantité de substance libérée en fonction du temps à un niveau optimum.

## Revendications

1. Produit multicouches destiné à l'administration orale et à la libération contrôlée de plusieurs substances actives différentes dans le rumen d'un animal de rente, le produit comprenant un noyau d'urée et progressant depuis le noyau, de manière concentrique :
- une matrice d'enrobage formée de matières grasses hydrogénées à base d'huile de colza, de tournesol ou d'huile de palme, présentant une cinétique de dégradation dans le rumen comprise entre 1 et 24h,
- une couche de seconde substance active choisie parmi le carbonate de calcium micronisé, le sulfate de sodium micronisé, une poudre de quilaia micronisée, une poudre d'Ascophyllum Nodosum micronisée,
- une matrice d'enrobage formée de matières grasses hydrogénées à base d'huile de colza, de tournesol ou d'huile de palme, présentant une cinétique de dégradation dans le rumen comprise entre 1 et 24h,
la quantité de matrice d'enrobage étant comprise entre 2 et 13%, en poids du produit
le produit se présentant sous la forme d'une bille sphérique présentant un diamètre compris entre 0,01 et 5 mm.

## Patentansprüche

1. Mehrschichtprodukt zur oralen Verabreichung und zur kontrollierten Freisetzung mehrerer verschiedener aktiver Substanzen im Rumen eines Nutztiers, das Produkt umfassend einen Harnstoffkern und konzentrisch ausgehend von dem Kern:
- eine Überzugsmatrix, die aus hydrierten Fetten auf Basis von Raps-, Sonnenblumen- oder Palmöl gebildet ist, die eine Abbaukinetik im Rumen zwischen 1 und 24 h aufweist,
- eine Schicht aus einer zweiten aktiven Substanz, die aus mikronisiertem Calziumkarbonat, mikronisiertem Natriumsulfat, einem Pulver aus mikronisiertem Quillaja, einem Pulver aus mikronisiertem Ascophyllum nodosum gewählt ist,
- eine Überzugsmatrix, die aus hydrierten Fetten auf Basis von Raps-, Sonnenblumen- oder Palmöl gebildet ist, die eine Abbaukinetik im Rumen zwischen 1 und 24 h aufweist,
wobei die Menge der Überzugsmatrix zwischen 2 und 13 Gewichts-% des Produkts beträgt
wobei das Produkt in Form einer sphärischen Kugel mit einem Durchmesser zwischen 0,01 und 5 mm vorliegt.

## Claims

1. A multi-layered product for oral administration and controlled release of a plurality of different active substances into the rumen of a production-type animal, the product comprising a core of urea and progressing from the core in a concentric manner:
- a coating matrix formed from hydrogenated fats based on rapeseed, sunflower, or palm oil, with degradation kinetics in the rumen of between 1 and 24 hours,
- a layer of a second active substance selected from micronised calcium carbonate, micronised sodium sulphate, micronised quilaia powder, and micronised Ascophyllum Nodosum powder,
- a coating matrix formed from hydrogenated fats based on rapeseed, sunflower, or palm oil, with degradation kinetics in the rumen of between 1 and 24 hours,
the amount of coating matrix being between 2 and 13%, by weight of the product
the product being in the form of a spherical ball with a diameter of between 0.01 and 5 mm.
